# EUROPÄISCHE PATENTSCHRIFT

(11) **EP 0 392 383 B1**
(45) Veröffentlichungstag und Bekanntmachung des Hinweises auf die Patenterteilung: **14.06.1995**
(21) Anmeldenummer: 90106627.4
(22) Anmeldetag: 06.04.1990
(51) Int. Cl.: F16K 3/00

(54) **Schieberventil**
Sliding valve
Vanne à tiroir

(30) Priorität: 15.04.1989 DE 3912402
(43) Veröffentlichungstag der Anmeldung: 17.10.1990
(73) Patentinhaber: Schubert & Salzer Control Systems GmbH, 85053 Ingolstadt (DE)
(72) Erfinder: Hobauer, Anton, D-8547 Greding (DE); Welser, Gerhard, D-8079 Hitzhofen (DE); Lange, Rainer, Dr., D-8858 Neuburg/Donau (DE)
(74) Vertreter: Canzler, Rolf, Dipl.-Ing.

(56) Entgegenhaltungen:
- EP-A- 0 140 314
- DE-A- 1 809 588
- DE-A- 3 113 004
- DE-A- 3 143 384
- DE-A- 3 146 994
- DE-A- 3 545 266
- DE-U- 8 606 140
- FR-A- 2 524 105
- GB-A- 1 219 572

## Beschreibung

Die vorliegende Erfindung betrifft ein Schieberventil gemäß dem Oberbegriff des Anspruches 1.

Bei Schieberventilen ist es bekannt für die bewegliche oder feststehende Platte als Werkstoff Metall zu verwenden. Diese Platten haben gute mechanische Eigenschaften, beispielsweise eine hohe Elastizität und Festigkeit, aber besitzen den Nachteil einer hohen Gleitreibung. Um bessere Gleiteigenschaften zu erreichen, ist es bekannt, die Platten mit einer Schicht aus keramischem Werkstoff zu versehen oder die Platten aus keramischem Werkstoff herzustellen. Ein solches Ventil ist in der DE 86 06 140 U1 beschrieben. Die DE 35 45 266 A1 zeigt ein Schieberventil mit zwei feststehenden Platten und einer beweglichen Platte aus einem keramischen Material. Aus Keramik sind auch die in der DE 33 20 387 A1 gezeigten Platten eines als Schieberventil ausgebildeten Sanitärventils. Die verwendete Keramik hat den Nachteil, daß sie spröde ist und empfindlich auf Temperaturschwankungen reagiert.

Es ist auch bekannt, Schieberplatten aus Kohlenstoffwerkstoff herzustellen. Diese Platten haben gute Gleiteigenschaften und sind gegenüber Temperaturschwankungen und aggresiven Medien unempfindlich. Sie besitzen jedoch den Nachteil, daß sie spröde sind und auf mechanische Verformungen empfindlich reagieren. Sie lassen sich daher schwer handhaben und sind durch Druckschläge des Mediums leicht zu beschädigen. Solche Beanspruchungen entstehen beispielsweise bei Schließvorgängen oder in noch stärkerem Maße bei Kondensatrückschlägen. Besonders bei Schieberventilen mit einer beweglichen Platte und nur einer mit dieser zusammenarbeitenden, feststehenden Platte kann auch die Beaufschlagung des Ventils entgegen der vorgesehenen Durchflußrichtung des Mediums zur Zerstörung einer Platte führen.

Durch die DE-31 43 384 A1 ist ein Gleitkörper bekannt, der aus mindestens zwei Schichten unterschiedlichen Materials besteht, wobei die eine, die Lauffläche aufweisende Schicht aus einem Kohlenstoffgleitwerkstoff und mindestens aus einer weiteren Schicht aus einem Faserverbundwerkstoff besteht. Der Faserverbundwerkstoff kann aus faserverstärktem Kohlenstoff oder faserverstärktem Kunststoff bestehen. Bei diesen Gleitkörpern handelt es sich um rotationssymetrische Körper, die aus einem Grundkörper aus Kohlenstoffgleitwerkstoff bestehen, auf die eine Schicht aus einem Faserverbundwerkstoff aufgewickelt wird, so daß ein Gleitkörper aus zwei fest verbundenen Schichten unterschiedlichen Materials entsteht. Derartige Gleitkörper eignen sich nicht zum Einsatz bei gattungsgemäßen Schieberventilen. Im übrigen tritt das beschriebene Problem der Schieberplatte bei den bekannten Gleitkörpern, die für Lagerbuchsen, Dichtungsringe der Gleitringdichtungen und bei Kolbentrennschiebern für Rotationskompressoren eingesetzt werden sollen, gar nicht auf.

Ein weiterer Nachteil ist, daß die Schieberplatte durch die von den Betätigungsmitteln auf die Scheiben aufgebrachten Kräfte beschädigt werden kann. Insbesondere bei schnellen Stellbewegungen treten große Stellkräfte an der Scheibe auf, wodurch die Befestigungsstellen bzw. Angriffspunkte der Betätigungsmittel an der Schieberplatte ausbrechen können oder die Scheibe zerstört wird.

Bei Schieberventilen mit einer drehbar verstellbaren Scheibe aus Stahl, ist es bekannt am Umfang der Scheibe eine Verzahnung anzubringen, mit der ein als Zahnstange ausgebildetes Betätigungsmittel zusammenarbeitet. Für Schieberplatten aus Kohlenstoffwerkstoff ist diese Art der Beaufschlagung einer Schieberplatte durch das Betätigungsmittel ungünstig, da aufgrund der Sprödigkeit des Werkstoffs eine Verzahnung oder ähnliches leicht beschädigt werden kann.

Aufgabe der vorliegenden Erfindung ist es, ein Schieberventil so auszugestalten, daß die Nachteile des Standes der Technik vermieden werden und Ventilplatten in einfacher Weise für den Angriff von Betätigungs- und Haltemitteln ausgebildet werden können.

Die Aufgabe wird erfindungsgemäß durch die Merkmale des Anspruches 1 gelöst.

Dadurch, daß wenigstens eine der Platten aus Kohle- oder Kunststoffwerkstoff besteht und wenigstens in den kritischen Bereichen durch eingelegte Fasern eine Verstärkung erfolgt, wird erreicht, daß die mechanischen Eigenschaften dieser Platte wesentlich verbessert werden. Außerdem hat so die Platte noch andere günstige Eigenschaften, so z.B. eine hohe chemische Beständigkeit oder eine geringe Gleitreibung. Besonders vorteilhaft ist es, wenn die Stege zwischen zwei Durchbrechungen durch eingelagerte Fasern verstärkt sind, da die Stege besonders bruchgefährdet sind. Auf diese Weise werden bei dem erfindungsgemäß ausgestalteten Schieberventil die vorteilhaften Eigenschaften des Grundwerkstoffs, z.B. auf chemischem Gebiet, mit den Eigenschaften einer hohen mechanischen Festigkeit, die die Folge des Verbunds mit den eingelagerten Fasern ist, kombiniert, so daß auch komplizierte Ausgestaltungen der Platten ermöglicht werden. Eine derart ausgestaltete Platte verliert ihre Sprödigkeit. Der innere Zusammenhalt des Werkstoffs wird wensentlich verbessert und die mechanische Belastbarkeit gesteigert. Die im Betrieb eines Schieberventils auftretenden Belastungen durch Druckschwankungen des Mediums können von einem derart ausgestalteten Ventil ohne Schaden überstanden werden. Durch die Verwendung eines Kohlenstoffwerkstoffs als Grundwerkstoff für die Platte eines Schieberventils wird aufgrund dessen guter Gleiteigenschaften eine leichte Verschiebbarkeit ermöglicht, und es werden gute Korrosions- und Dichteigenschaften erreicht. Ein so ausgestattetes Ventil ist unempfindlich gegen Temperaturschwankungen.

Gute Festigkeitswerte werden durch die Verwendung von Glas- oder Kohlefasern als Verstärkung erreicht. Besonders vorteilhaft ist es, wenn der durch Fasern verstärkte Verbundwerkstoff aus Kohlenstoffwerkstoff mit eingelagerten Kohlefasern besteht. Des weiteren sind auch synthetische Fasern, beispielsweise aus Aramid, als Verstärkung geeignet. Durch die erfindungsgemäße Ausgestaltung eines Schieberventils wird weiter erreicht, daß die Platten mit Bohrungen oder Vertiefungen der Oberfläche versehen werden können, durch die eine einfache Führungs- und Befestigungmöglichkeit auch für eine bewegliche Platte geschaffen wird. Dies ist besonders vorteilhaft für Platten von Drehschieberventilen, da diese besonders sorgfältig geführt und zentrisch gelagert werden müssen. Der Faserverlauf kann vorteilhafterweise den Konturen von z.B. Bohrungen und dem Verlauf der Oberfläche angepaßt sein, so daß wenigstens an solchen Stellen einer Platte eines Schieberventils besonders hohe mechanische Eigenschaften vorhanden sind. Betätigungsgestänge können dadurch direkt in die Schieberplatte eingeschraubt werden. Die Verbesserung der mechanischen Eigenschaften macht es darüberhinaus möglich, daß ursprünglich spröde Platten jetzt mechanisch nachbearbeitet werden können. Dadurch können die Platten als Rohlinge hergestellt und dann die Durchbrechungen eingearbeitet werden, oder beispielsweise eine Verzahnung am Umfang nachträglich angebracht werden.

Besonders günstig für die Festigkeitseigenschaften ist es, wenn der Faserverlauf sich am Spannungsverlauf in der Platte orientiert, d.h., wenn die Anordnung der Fasern im Bereich der Zugspannung erfolgt und der Faserverlauf der Richtung der Zugspannungen entspricht.

Besonders vorteilhaft ist es, die Platten mit Ansätzen zu versehen, die mit den Betätigungsmitteln der Platte verbunden sind, oder an denen diese angreifen. Durch die Verstärkung mittels Fasern besitzen die Ansätze genügend Festigkeit. Durch die Verstärkung, insbesondere der Außenkontur der Platte, ist es möglich, die Scheibe in einer Fassung aufzunehmen, von der sie beispielsweise drehfest gehalten werden kann und an der die Betätigungsmittel angreifen können. Dabei kann die Scheibe auch in die Fassung eingepreßt sein.

Besonders vorteilhaft ist es, die Fasern im Bereich von in die Platten eingelagerten Trägern anzuordnen. Diese werden dadurch besser mit den Platten verbunden. Ein Ausbrechen wird verhindert.

Im folgenden wird die Erfindung anhand der Figuren beschrieben. Es zeigen:
- Figur 1: - eine Schieberplatte mit Durchtrittsöffnungen im Schnitt;
- Figur 2: - eine Schieberplatte mit einer Darstellung des Faserverlaufs;
- Figur 3: - eine Schieberplatte mit einer Darstellung des Faserverlaufs in der Seitenansicht;
- Figur 4: eine feststehende Platte mit einer kreisförmigen Durchbrechung als Durchtrittsöffnung für das Medium im Schnitt;

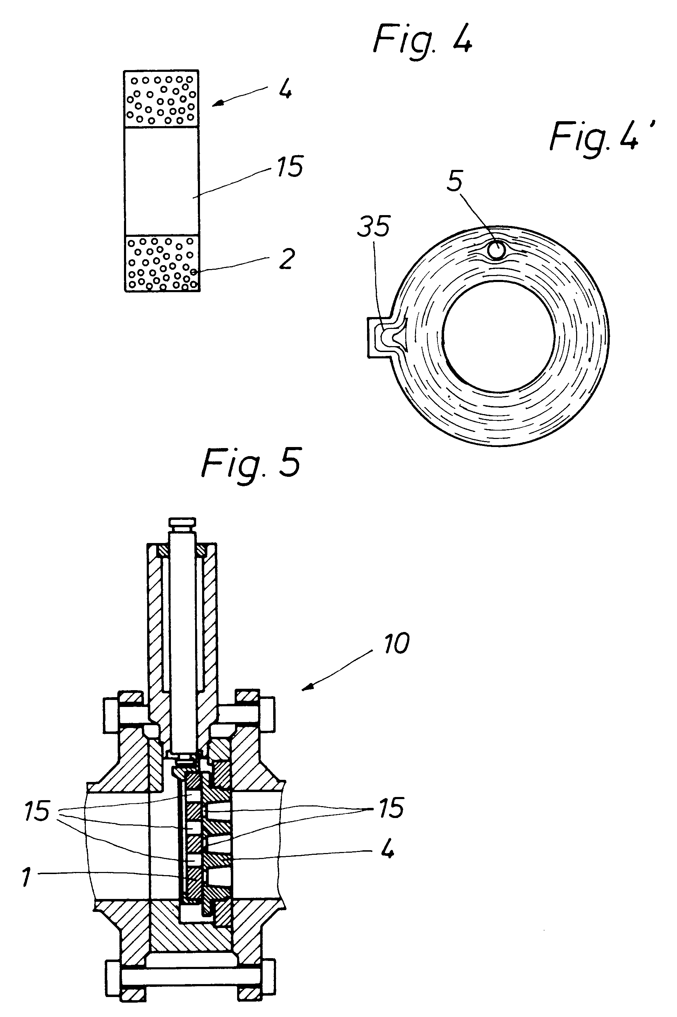

- Figur 4′: eine feststehende Platte mit einem Ansatz und einer Bohrung;
- Figur 5: ein Schieberventil im Schnitt;

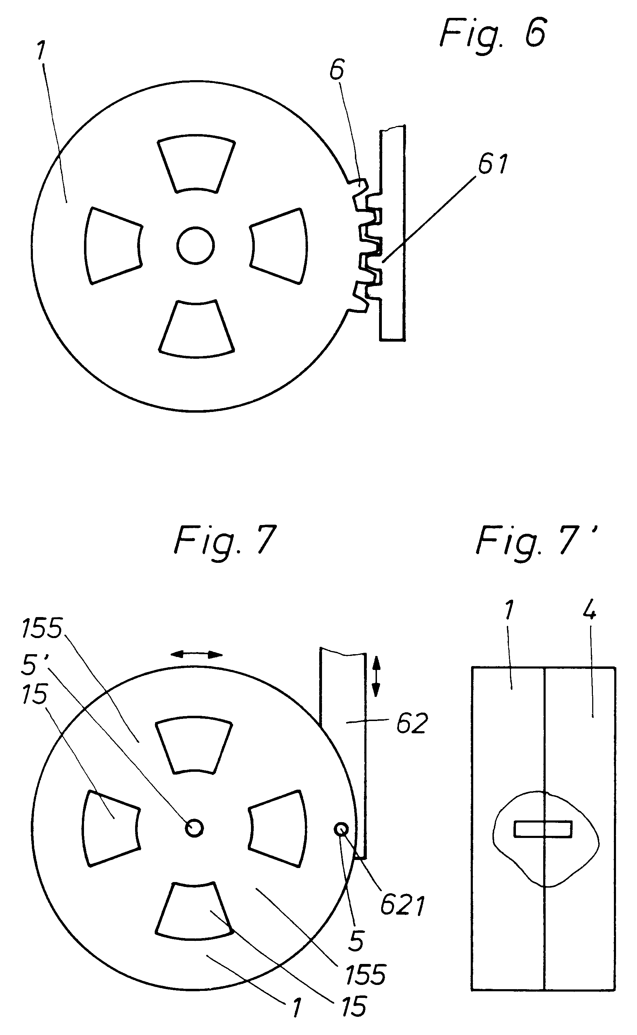

- Figur 6: eine Platte eines Drehschieberventils mit einer Verzahnung am Umfang;
- Figur 7: eine Platte eines Drehschieberventils mit einer Bohrung;
- Figur 7′: eine drehbare und eine feststehende Platte eines Schieberventils teilweise im Schnitt;

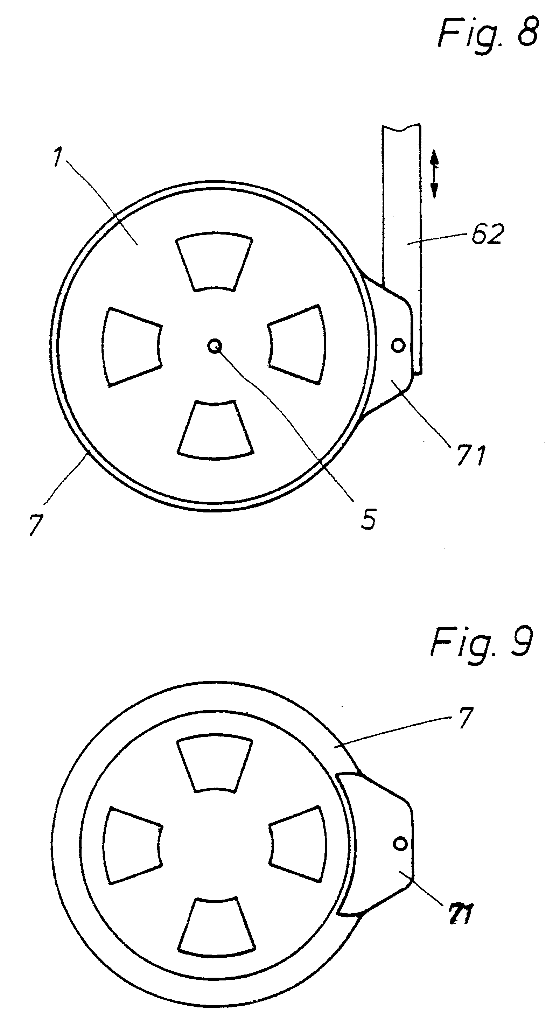

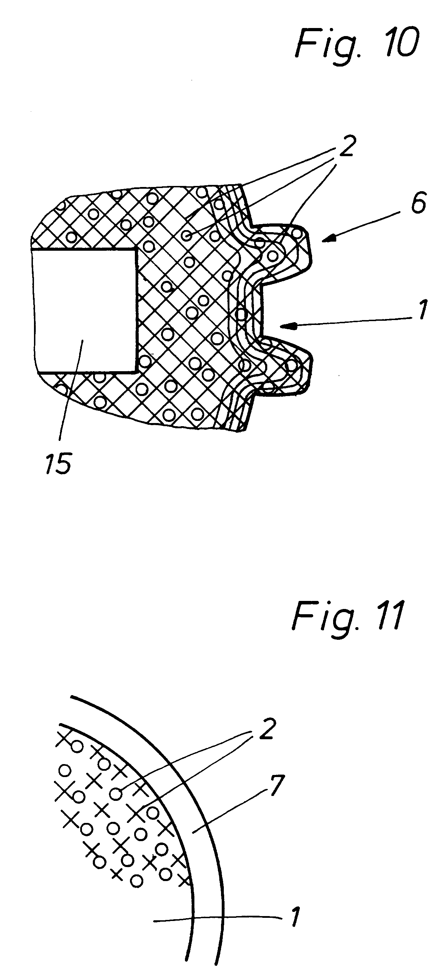

- Figur 8 und Figur 9: eine Platte mit einer Fassung;
- Figur 10: einen Schnitt durch eine Platte mit Verzahnung;
- Figur 11: einen Schnitt durch eine Platte mit einer Fassung;

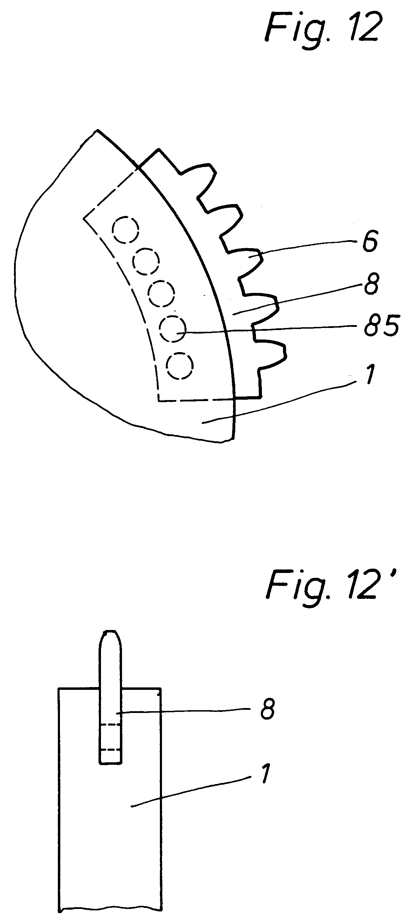

- Figur 12: eine Platte mit einem eingelagerten Träger;
- Figur 12′: eine Platte mit eingelagertem Träger im Schnitt.

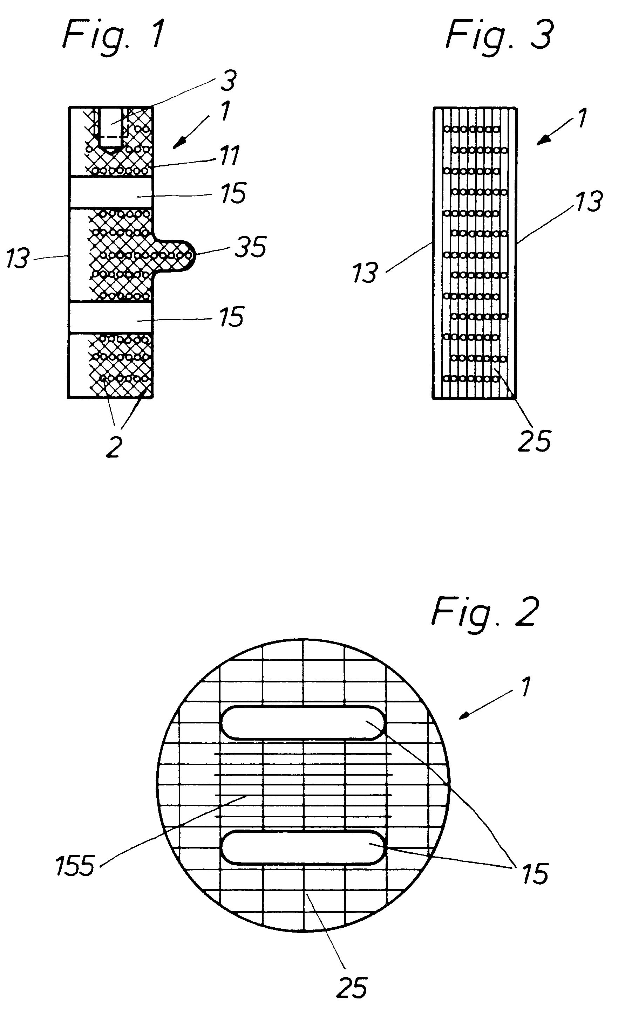

Die Schieberplatte 1 (bewegliche Platte) von Figur 1 besteht aus einem Kohle-Verbundwerkstoff. Sie ist in ihrem von der Gleitfläche 13 abgewandten Teil 11 mit Fasern 2 verstärkt. Besonders vorteilhaft für gute Gleiteigenschaften und gute Dichtheit ist es, wenn die Schieberplatte so ausgestaltet ist, daß der unmittelbare Bereich der Gleitfläche 13 ohne eine Fasereinlage ist, so daß ein durch die Fasern 2 ungestörtes Gleiten auf einer Anlagefläche einer anderen Platte oder Scheibe erfolgen kann. Die Fasern 2 der Platte 1 sind nicht orientiert eingelagert, was durch die Darstellung mit Schraffur und Kreisen angedeutet wird. Dadurch können Zugspannungen in allen Richtungen aufgenommen werden. Eine scharfe Trennlinie zwischen einem Bereich der Platte 1, in dem Fasern 2 eingelagert sind, und einem Bereich, in dem keine Fasern eingelagert sind, ist nicht erforderlich. Eine Trennung ist nur insofern notwendig, als die Gleitfläche 13 frei von Fasern 2 sein soll. Die mechnischen Eigenschaften der erfindungsgemäßen Schieberplatte 1 ermöglichen, daß diese mit einer Gewindebohrung 3 zur Aufnahme einer nichtgezeigten Ventilbetätigungsstange versehen werden kann. Ein Ausbrechen des Gewindes wird durch die Fasern 2 verhindert. Die Schieberplatte 1 besitzt zusätzlich einen Ansatz 35, der ebenfalls zur Aufnahme eines Betätigungsmittels dienen kann. Die Schieberplatte 1 ist mit Durchbrechungen 15, die die Durchtrittsöffnung für das strömende Medium bilden, versehen. Die bewegliche Platte 1 arbeitet mit einer nicht gezeigten feststehenden Platte, die entsprechende Durchbrechungen besitzt, zusammen. In bekannter Weise wird damit der Durchfluß eines flüssigen oder gasförmigen Mediums, z.B. Dampf gesteuert. Trotz des für die Abdichtung nötigen Andrucks sind erfindungsgemäß ausgebildete, aus einem Kohleverbundwerkstoff aus Kohlenstoffwerkstoff mit Kohlefasern bestehenden Platten von Schieberventilen leichtgängig und unempfindlich gegen mechanische und thermische Beanspruchungen. Durch die Ausbildung von Ansätzen für Halte- und Betätigungsmittel, beispielsweise in Form eines Vierkants, auf der der Dichtfläche abgewandten Seite, ist die Schieberplatte leicht und direkt zu betätigen.

Figur 2 zeigt eine Schieberplatte 1 mit Durchbrechungen 15 für den Durchfluß des Mediums. Durch Linien ist der Verlauf der Fasern und deren Orientierung angedeutet. Die Fasern verlaufen längs und quer zu den länglich ausgebildeten Durchbrechungen 15, wobei eine größere Anzahl Fasern parallel zu diesen im Steg 155 verläuft, da hier größere Zugspannungen auftreten. Die in verschiedenen Richtungen verlaufenden Fasern sind miteinander gewebeartig verflochten und derart in der Schieberplatte 1 eingebettet, daß sie nicht aus der Gleitfläche heraustreten. Bei einseitig abdichtenden Ventilen ist das Gewebe 25 auf der der dichtenden, gleitenden Fläche abgewandten Seite der Schieberplatte 1 im Verbundwerkstoff angeordnet. Hier treten insbesondere bei Kondensatrückschlägen die größten Zugspannungen auf. Zur Verstärkung können auch Fasergewebe verwendet werden, bei denen die Fasern in mehr als zwei Orientierungsrichtungen verlaufen.

In Figur 3 ist eine Schieberplatte 1 gezeigt, die keine Durchbrechungen besitzt. Sie ist für ein Schieberventil, wie es die DE-33 90 493 C2 zeigt, anwendbar. Daneben ist die Erfindung ebenso auf Drehschieberventile, wie sie beispielsweise die DE-33 20 387 A1 zeigt, anwendbar, Die Schieberplatte 1 ist beidseitig dichtend und ohne Unterbrechungen ausgebildet. Zwischen den Dicht- und Gleitflächen 13 ist in der Schieberplatte 1 ein mehrlagiges Gewebe 25 aus Glasfasern angeordnet. Der Verbundwerkstoff der Schieberplatte besteht aus Kunststoff, beispielsweise Kunstharz plus Faserstoff. Als Fasermaterial kann ebenso auch ein anderer dafür geeigneter Faserstoff, beispielsweise Aramid, verwendet werden.

Figur 4 zeigt eine feststehende, ringförmige Platte 4 mit einer kreisförmigen Durchbrechung 15 für den Durchfluß des Mediums im Schnitt. Die Fasern verlaufen hier entsprechend der Ringform der Platte 4 parallel zur Außenkontur.

Figur 4' zeigt eine feststehende Platte 4 aus einem faserverstärkten Kohleverbundwerkstoff, die mit einem Ansatz 35 versehen ist, der die Platte im Gehäuse des Schieberventils drehfest fixiert. Die Platte zeigt weiterhin eine Bohrung 5, über die sie mit einem Zentrierstift, der in das Gehäuse des Schieberventils 10 eingreift, alternativ oder zusätzlich zum Ansatz 35 drehfest gehalten werden kann.

Figur 5 zeigt ein Schieberventil 10 mit einer feststehenden Platte 4 mit Durchbrechungen 15 für den Durchfluß des Mediums und einer beweglichen Platte 1 zur Steuerung des Durchflusses. Letztere wird zur Steuerung des Durchflusses senkrecht zu den Durchbrechungen 15 linear verschoben, wodurch die Platten gegeneinander beweglich sind. Die Erfindung ist aber auch anwendbar bei Schieberventilen, bei denen mehrere Platten relativ zum Gehäuse beweglich angeordnet sind.

Figur 6 zeigt eine Platte 1 für ein Drehschieberventil. Die Freigabe der Durchflußöffnungen erfolgt durch Verdrehen der beweglichen Platte 1. Die Platte 1 besitzt dazu an ihrem Außen umfang eine Verzahnung 6, die mit einer Zahnstange 61 zusammenarbeitet. Diese wird ihrerseits durch den nicht gezeigten Verstellmechanismus des Drehschieberventils betätigt. Die Verzahnung am Außenumfang der Ventilscheibe ist bei der Herstellung eingearbeitet und durch eingelagerte Fasern verstärkt. Vorteilhafterweise verlaufen die Fasern im Umfangsbereich der Platte 1 entsprechend deren Außenkontur, siehe Figur 10. Dies ergibt eine besonders hohe Festigkeit für die Verzahnung 6. Durch diese Art der Einlagerung der Fasern wird in etwa, wie bei gerollten Gewinden, der Vorteil erreicht. Einfacher herzustellen ist eine Ventilplatte 1 mit einer Verzahnung, wenn diese mit nicht orientiert eingelagerten Fasern verstärkt ist. In diesem Falle ist die Verzahnung am Außenumfang durch z.B. einfaches Herausfräsen herstellbar.

Figur 7 zeigt eine Platte 1 eines Drehschieberventils von der Seite, mit der sie auf einer feststehenden Platte 4 aufliegt. Im Zentrum der Platte 1 ist eine Sacklochbohrung 5' zu erkennen, mit Hilfe derer in Verbindung mit einem Bolzen die Platte 1 drehbar an der feststehenden Platte 4 gelagert ist. Dies ist in Figur 7' gezeigt. Die Ventilspindel 62 greift mit ihrem zylinderförmigen Ansatz 621 in eine Bohrung 5 der Platte 1. Durch lineare Bewegungen der Ventilspindel 62, die vom Ansatz 621 auf die Platte 1 übertragen werden, wird diese verdreht und das Ventil geöffnet oder geschlossen. Insbesondere an der Bohrung 5 treten bei schnellen Stellbewegungen Kräfte auf, die durch die Faserverstärkung von der Platte 1 so aufgenommen werden können, daß keine Beschädigungen entstehen. Im Bereich der Bohrungen 5 können die Fasern mit höherer Dichte als in der übrigen Platte verteilt sein. Ebenso wie bei der linear bewegten Platte treten auch bei der eines Drehschieberventils in den Stegen 155 insbesondere bei Kondensatrückschlägen hohe Spannungen auf, die zur Zerstörung der Platte führen können. Zusätzlich zu den Verstärkungen im Bereich des Ansatzes des Antriebsmittels der Platte, wo bei Belastungen bereits während des Normalbetriebs des Ventils auftreten, ist es also besonders vorteilhaft, auch die Stege 155 der Platte durch Fasern zu verstärken.

Figur 8 zeigt eine Platte eines Drehschieberventils, die über eine ringförmige Fassung 7 verdrehsicher gehalten wird. Mittels einer Fassung können aber ebensogut auch linear bewegte Schieberplatten fixiert werden. Die Fassung 7 besitzt eine Lasche 71, an der die Ventilspindel angreift. Um eine verdrehsichere Verbindung zwischen Fassung 7 und Platte 1 herzustellen, ist die Fassung 7 auf die Platte 1 aufgepreßt. Dadurch entstehen in dieser Spannungen, die durch die eingelagerten Fasern aufgenommen werden, so daß im Betrieb des Ventils und beim Aufpressen der Fassung 7 keine Beschädigungen der Platte 1 auftreten. Insbesondere der Bereich des Außenumfangs der Platte 1 ist beim Aufpressvorgang der Fassung 7 auf die Platte 1 gefährdet. Zur Aufnahme dieser Spannungen ist die Platte 1 deswegen an ihrem Außenumfang mit Fasern verstärkt. Der Verlauf der Fasern folgt dabei der Außenkontur der Platte. Die Platte 1 von Figur 8 zeigt in ihrem Zentrum die sacklochförmige Bohrung 5, über die sie über einen Bolzen mit der feststehenden Ventilplatte zentrisch geführt in Verbindung steht. Figur 8 zeigt die Platte 1 von der Seite, mit der sie abdichtend mit einer feststehenden Ventilplatte zusammenarbeitet.

Figur 9 zeigt die Platte 1 von der rückwärtigen Seite. An der Fassung 7 ist die Lasche 71 angeordnet, an der die Ventilspindel 62 über einen Bolzen ansetzt und die Ventilscheibe verdrehen kann. Die Fassung 7 reicht vom Umfang der Scheibe ringförmig auf die ebene Seite der Platte 1. Durch die Verstärkung der Platte 1 mit Fasern ist es weiterhin möglich, einen Ansatz 35 wie in Figur 1 auch bei der Platte 1 eines Drehschieberventils beispielsweise am Außenumfang so anzubringen, daß die Ventilspindel 62 direkt damit zusammenarbeiten kann. Die Einlagerung von Fasern gewährleistet die Stabilität des Ansatzes 35.

Figur 10 zeigt einen Ausschnitt einer Platte 1 eines Drehschieberventils, in dem der Verlauf der Fasern 2 eingezeichnet ist. Die Platte 1 ist an Ihrem Außenumfang mit einer Verzahnung 6 versehen, die dem Antrieb dient. Im Grundkörper ist die Faserorientierung ebenso, wie in Figur 1 bereits dargestellt, unorientiert. Zur Erhöhung der Festigkeit der Verzahnung 6 sind die Fasern 2 an der Kontur der Platte 1 entsprechend deren Verlauf angeordnet. Die Fasern 2 verlaufen in der Verzahnung 6 ununterbrochen, was die Festigkeit erhöht. Die Fasern 2 des Grundkörpers der Platte 1, also hier unorientierte Fasern, sind auch in der Verzahnung 6 enthalten. Dadurch wird dort eine besonders hohe Festigkeit erzielt. In entsprechender Weise kann auch ein Ansatz 35 der Platte 1 (Fig. 1, Fig. 4'), der zur Aufnahme des Betätigungsmittels dient, mit Fasern 2 verstärkt sein.

Figur 11 zeigt einen Teil einer Platte 1, die von einer Fassung 7 umgeben ist. Im Außenbereich der Platte 1 ist diese durch Fasern 2 verstärkt. Dargestellt ist ein Faserverlauf, bei dem die Fasern 2 nicht richtungsorientiert sind.

Figur 12 zeigt einen Teil einer Platte 1, in die ein Träger 8 eingearbeitet ist. An seiner Außenseite besitzt er eine Verzahnung 6. Für eine formschlüssige Verbindung sind Bohrungen 85 vorgesehen, in die der Verbundwerkstoff der Platte 1 beim Herstellen eindringt. Der Verbundwerkstoff ist durch Fasern, hier nicht dargestellt, verstärkt. Ein Ausbrechen des Trägers 8 wird dadurch vermieden. Neben Trägern, die eine Verzahnung besitzen, kann praktisch jede beliebige Trägerform in den Grundkörper der Platte 1 eingearbeitet werden. Neben einer Anordnung am Umfang, die besonders günstig für Platten von Drehschieberventilen ist, kann ebensogut der Ansatz 35, wie er in Figur 1 gezeigt ist, mittels eines eingelagerten Trägers ausgeführt werden. So ist es besonders vorteilhaft bei Drehschieberventilen einen Zentrierbolzen, wie er in Figur 7' gezeigt ist, in eine der Platten 1 einzuarbeiten. Ebensogut kann dies beispielsweise mit Gewindebüchsen oder Halterungen für Andruckfedern geschehen. Neben dem Ansatz für Betätigungsmittel können die Träger auch ausschließlich oder zusätzlich zur weiteren Verstärkung der Platte 1 dienen, so daß diese besonders stabil ist.

Figur 12' zeigt eine erfindungsgemäße Platte 1 mit einem bereits bei der Herstellung der Platte eingelagerten Träger 8 im Schnitt.

## Patentansprüche

1. Schieberventil zur Steuerung des Durchflusses von flüssigen oder gasförmigen Medien mit einem Gehäuse, mit gegeneinander beweglich und quer zur Durchflußrichtung angeordneten, dichtend zusammenarbeitenden Platten (1, 4), wobei wenigstens eine Platte eine Durchbrechung (15) für den Durchfluß des Mediums sowie Ansätze (6, 8, 35) und/oder Aussparungen (5) oder eine Aufnahmekontur für eine Fassung (7) für Halte-, Führungs- oder Betätigungsmittel besitzt, **dadurch gekennzeichnet**, **daß** wenigstens eine der Platten (1; 4) aus einem Kohlewerkstoff oder Kunststoffwerkstoff besteht, der wenigstens im Bereich der Aussparungen (5) und/oder Ansätze oder der Aufnahmekontur durch eingelegte Fasern (2) verstärkt ist.

2. Schieberventil nach Anspruch 1 mit einer Platte mit mehreren durch einen Steg abgegrenzten Durchbrechungen, **dadurch gekennzeichnet, daß** der Steg (155) zwischen zwei Durchbrechungen (15) mit Fasern (2) verstärkt ist.

3. Schieberventil nach Anspruch 1 oder 2, **dadurch gekennzeichnet, daß** die Fasern (2) Kohlefasern sind.

4. Schieberventil nach Anspruch 1 oder 2, **dadurch gekennzeichnet, daß** die Fasern (2) Glasfasern sind.

5. Schieberventil nach Anspruch 1 oder 2, **dadurch gekennzeichnet, daß** die Fasern (2) aus einem Kunststoff bestehen.

6. Schieberventil nach einem oder mehreren der Ansprüche 1 bis 5, **dadurch gekennzeichnet, daß** die Fasern (2) als Gewebe (25) eingebettet sind.

7. Schieberventil nach einem oder mehreren der Ansprüche 1 bis 6, **dadurch gekennzeichnet, daß** die Fasern (2) in einer Ebene parallel zur Gleitfläche (13) der Platte (1; 4) verlaufen.

8. Schieberventil nach einem oder mehreren der Ansprüche 1 bis 7, **dadurch gekennzeichnet, daß** die Faserorientierung dem Spannungsverlauf in der Platte (1; 4) angepaßt ist.

9. Schieberventil nach einem oder mehreren der Ansprüche 1 bis 8, **dadurch gekennzeichnet, daß** die Fasern (2) im Abstand zur Gleitfläche (13) der Platte (1; 4) angeordnet sind, so daß die Gleitfläche der Platte (1; 4) frei von eingelegten Fasern ist.

10. Schieberventil nach einem oder mehreren der Ansprüche 1 bis 9 mit einer Platte mit Ansätzen (35), **dadurch gekennzeichnet, daß** die Ansätze (35) als Verzahnung (6) ausgebildet sind.

11. Schieberventil nach einem oder mehreren der Ansprüche 1 bis 10, **dadurch gekennzeichnet, daß** der Verlauf der Fasern (2) der Kontur der Ansätze (35) und/oder der Aussparungen (3; 5) angepaßt ist.

12. Schieberventil nach einem oder mehreren der Ansprüche 1 bis 11, **dadurch gekennzeichnet, daß** die Außenkontur der Scheibe zur Aufnahme einer Fassung (7) durch Fasern verstärkt ist.

13. Schieberventil nach einem oder mehreren der Ansprüche 1 bis 12, **dadurch gekennzeichnet, daß** die Platte (1; 4) im Bereich von in die Platte eingelagerten Trägern (8) mit Fasern verstärkt ist.

## Claims

1. A sliding valve for controlling the throughflow of liquid or gaseous media, having a housing, [and] having plates (1, 4) arranged transversely to the throughflow direction so as to be movable relative to one another and cooperating in a sealed manner, at least one plate having a perforation (15) for the throughflow of the medium as well as attachments (6, 8, 35) and/or recesses (5) or a receiving profile for a mounting (7) for retaining, guiding or actuating means, **characterized in that** at least one of the plates (1, 4) consists of a carbon material or plastics material, reinforced by inlaid fibres (2) at least in the region of the recesses (5) and/or attachments or the receiving profile.

2. A sliding valve according to Claim 1 having a plate with a plurality of perforations separated by a web, **characterized in that** the web (155) is reinforced by fibres (2) between two perforations (15).

3. A sliding valve according to Claim 1 or 2, **characterized in that** the fibres (2) are carbon fibres.

4. A sliding valve according to Claim 1 or 2, **characterized in that** the fibres (2) are glass fibres.

5. A sliding valve according to Claim 1 or 2, **characterized in that** the fibres (2) consist of a plastics material.

6. A sliding valve according to one or more of Claims 1 to 5, **characterized in that** the fibres (2) are embedded as a tissue (25).

7. A sliding valve according to one or more of Claims 1 to 6, **characterized in that** the fibres (2) extend in a plane parallel to the sliding face (13) of the plate (1; 4).

8. A sliding valve according to one or more of Claims 1 to 7, **characterized in that** the orientation of the fibres is adapted to the stress pattern in the plate (1; 4).

9. A sliding valve according to one or more of Claims 1 to 8, **characterized in that** the fibres (2) are arranged at a distance from the sliding face (13) of the plate (1; 4), so that the sliding face of the plate (1; 4) is free of inlaid fibres.

10. A sliding valve according to one or more of Claims 1 to 9, with a plate with attachments (35), **characterized in that** the attachments (35) are constructed as teeth (6).

11. A sliding valve according to one or more of Claims 1 to 10, **characterized in that** the pattern of the fibres (2) is adapted to the profile of the attachments (35) and/or of the recesses (3; 5).

12. A sliding valve according to one or more of Claims 1 to 11, **characterized in that** the external profile of the disc for receiving a mounting (7) is reinforced by fibres.

13. A sliding valve according to one or more of Claims 1 to 12, **characterized in that** the plate (1; 4) is reinforced by fibres in the region of supports (8) inlaid in the plate.

## Revendications

1. Vanne à tiroir pour commander l'écoulement de fluides liquides ou gazeux, comportant un corps dans lequel sont montées deux plaques d'obturation (1,4) mobiles l'une par rapport à l'autre et disposées transversalement par rapport au sens de l'écoulement du fluide en étant appliquées de manière étanche l'une contre l'autre, au moins l'une de ces plaques étant percée d'une échancrure (15) pour le passage du fluide et comportant des bossages (6,8,35) et/ou des évidements (5) ou un bord destiné à recevoir une monture (7) pour des organes de maintien, de guidage ou de manoeuvre, caractérisée en ce qu'au moins l'une des plaques (1;4) est confectionnée dans une matière à base de carbone ou à base de matière plastique, qui est renforcée par des fibres internes (2) au moins à l'endroit des évidements (5) et/ou des bossages ou du bord de réception.

2. Vanne à tiroir selon la revendication 1, comportant une plaque d'obturation pourvue de plusieurs échancrures de passage délimitées par des secteurs de liaison, caractérisée en ce que le secteur (155) entre deux échancrures (15) est renforcé par des fibres (2).

3. Vanne à tiroir selon la revendication 1 ou 2, caractérisée en ce que les fibres de renfort (2) sont des fibres de carbone.

4. Vanne à tiroir selon la revendication 1 ou 2, caractérisée en ce que les fibres de renfort (2) sont des fibres de verre.

5. Vanne à tiroir selon la revendication 1 ou 2, caractérisée en ce que les fibres de renfort (2) sont en matière synthétique.

6. Vanne à tiroir selon l'une ou plusieurs des revendications 1 à 5, caractérisée en ce que les fibres de renfort (2) sont incorporées dans la plaque sous la forme d'une armature tissée (25).

7. Vanne à tiroir selon l'une ou plusieurs des revendications 1 à 6, caractérisée en ce que les fibres de renfort (2) sont disposées dans un plan parallèle à la face de glissement (13) de la plaque d'obturation (1;4).

8. Vanne à tiroir selon l'une ou plusieurs des revendications 1 à 7, caractérisée en ce que l'orientation des fibres de renfort (2) de la plaque (1;4) est adaptée à celle des contraintes en jeu dans la plaque.

9. Vanne à tiroir selon l'une ou plusieurs des revendications 1 à 8, caractérisée en ce que les fibres de renfort (2) de la plaque (1;4) sont disposées dans celle-ci à une certaine distance de la face de glissement (13) de la plaque, pour que la face de glissement de la plaque (1;4) soit exempte des fibres noyées dans la plaque.

10. Vanne à tiroir selon l'une ou plusieurs des revendications 1 à 9, comportant une plaque pourvue de bossages (35), caractérisée en ce que les bossages (35) sont constitués par une denture (6).

11. Vanne à tiroir selon l'une ou plusieurs des revendications 1 à 10, caractérisée en ce que la disposition et l'orientation des fibres de renfort (2) sont adaptées au profil des bossages (35) et/ou des évidements (3;5).

12. Vanne à tiroir selon l'une ou plusieurs des revendications 1 à 11, caractérisée en ce que le bord extérieur du disque prévu pour recevoir une monture (7) est renforcé par des fibres (2).

13. Vanne à tiroir selon l'une ou plusieurs des revendications 1 à 12, caractérisée en ce que la plaque d'obturation (1;4) est renforcée par des fibres (2) aux endroits où des organes porteurs (8) sont incorporés dans la plaque.
